# EUROPÄISCHE PATENTSCHRIFT

(11) **EP 1 333 514 B1**
(45) Veröffentlichungstag und Bekanntmachung des Hinweises auf die Patenterteilung: **01.07.2009**
(21) Anmeldenummer: 02002361.0
(22) Anmeldetag: 31.01.2002
(51) Int. Cl.: H01M 8/02, H01M 8/24

(54) **Dichtrahmen für Brennstoffzellenstacks**
Sealing frame for fuel cell stack
Cadre d'étanchéité pour pile à combustible

(43) Veröffentlichungstag der Anmeldung: 06.08.2003
(73) Patentinhaber: SFC Smart Fuel Cell AG, 85649 Brunnthal-Nord (DE)
(72) Erfinder: Böhm, Christian, 85635 Siegertsbrunn (DE); Huber, Markus, 85567 Grafing b Munchen (DE); Harbusch, Volker, 81371 München (DE)
(74) Vertreter: Grünecker, Kinkeldey, Stockmair & Schwanhäusser Anwaltssozietät

(56) Entgegenhaltungen:
- WO-A-00/26979
- US-A- 3 530 003
- US-A- 5 464 700
- US-B1- 6 261 710
- PATENT ABSTRACTS OF JAPAN vol. 009, no. 123 (E-317), 28. Mai 1985 (1985-05-28) & JP 60 010565 A (FUJI DENKI SOUGOU KENKYUSHO:KK), 19. Januar 1985 (1985-01-19)
- PATENT ABSTRACTS OF JAPAN vol. 011, no. 220 (E-524), 16. Juli 1987 (1987-07-16) & JP 62 040170 A (FUJI ELECTRIC CO LTD), 21. Februar 1987 (1987-02-21)

## Beschreibung

### Gebiet der Erfindung

Die Erfindung betrifft einen Dichtrahmen zum Einbau zwischen den Strömungsplatten eines Brennstoffzellenstacks mit einer alternierenden Anordnung von Strömungsplatten und Elektrolyteinrichtungen und mit zwischen den Strömungsplatten und Elektrolyteinrichtungen gebildeten Kathoden- und Anodenbereichen. Der Dichtrahmen ist derart ausgebildet ist, dass er zum Einbau zwischen den Strömungsplatten geeignet ist und die wechselseitige Abdichtung der Kathodenbereiche und der Anodenbereiche gewährleistet.

### Stand der Technik

Als Brennstoffzellenstacks werden in der Technik gestapelte und monopolar oder bipolar verschaltete Brennstoffzellen bezeichnet. Sie werden im Wesentlichen durch eine alternierende Anordnung von Strömungsplatten und Elektrolyteinrichtungen aufgebaut.

Die Strömungsplatten trennen die einzelnen Brennstoffzellen und dienen der Fluidführung von zum Betrieb des Brennstoffzellenstacks benötigten und dabei entstehenden kathoden- und anodenseitigen Fluiden. Hierzu weisen die beiden Seiten jeder Strömungsplatte Bereiche mit Strömungskanälen auf, die in der Technik gemeinhin als Flowfields bezeichnet werden.

Bei bipolar aufgebauten Stacks ist die Strömungsplatte als Bipolarplatte ausgebildet, deren eine Seite die kathodenseitigen Strömungsbereiche und deren andere Seite die anodenseitigen Strömungsbereiche bilden.

Die Elektrolyteinrichtungen umfassen den eigentlichen Elektrolyten, beispielsweise eine Polymermembran, sowie die zu beiden Seiten jedes Elektrolyten vorgesehenen aktiven Bereiche mit Katalysatoreinrichtungen, Gasdiffusionsschichten, die dafür sorgen, dass Fluide aus den Strömungsbereichen der benachbarten Strömungsplatten gleichförmig den Elektrolyteinrichtungen zugeführt werden, und Elektrodeneinrichtungen zur Leistungsentnahme. Alle diese Elemente sind flächig ausgeführt.

Im Fall einer Membran als Elektrolyten wird in der Technik für die Elektrolyteinrichtung häufig die Bezeichnung MEA (für "Membrane Electrode Assembly") verwendet. Teilweise können mehrere Funktionen in eine Einrichtung integriert sein. So ist bei den MEA-Einheiten eine Schicht vorgesehen, die gleichzeitig als Elektrode und als Gasdiffusionsschicht dient.

Die nur für vorbestimmte lonen nennenswert durchlässigen Elektrolyteinrichtungen zeichnen für die räumlich getrennt ablaufenden Redoxprozesse verantwortlich. Gemäß dem oxidierenden bzw. reduzierenden Charakter der zu beiden Seiten der Elektrolyteinrichtungen ablaufenden Teilreaktionen werden die Bereiche zwischen Strömungsplatten und Elektrolyteinrichtungen als Kathoden- bzw. Anodenbereiche (oder Kathoden- bzw. Anodenkammern) bezeichnet.

Eine wesentliche Voraussetzung für den Betrieb eines Brennstoffzellenstacks ist, dass keine Vermischung von kathoden- und anodenseitigen Fluiden auftritt.

Daher müssen die Kathoden- und Anodenbereiche bei der Fertigung des Stacks zuverlässig und dauerhaft gegeneinander abgedichtet werden.

In einigen bekannten Ausführungsformen werden Elektrolyteinrichtungen mit in etwa denselben Flächenmaßen wie die Strömungsplatten verwendet, wobei der aktive Bereich der Elektrolyteinrichtung aber deutlich kleiner ist. Zur Abdichtung werden zwischen Strömungsplatten und der Elektrolyteinrichtungen Dichtungen vorgesehen, die die peripheren Bereiche der Kontaktflächen Strömungsplatten/Elektrolyteinrichtungen nach außen abdichten sollen, dabei aber die aktiven Bereiche aussparen.

In anderen Ausführungsformen wird im wesentliche die gesamte Fläche der Elektrolyteinrichtungen als aktiver Bereich genutzt. MEA Einrichtungen dieser Art werden in der Technik häufig als "flush cut MEA" bezeichnet. Dementsprechend haben die Elektrolyteinrichtungen eine deutlich kleinere Flächenausdehnung wie die Strömungsplatten. Zur Abdichtung werden an die Elektrolyteinrichtungen diese peripher umgebende Dichtungen angebracht, beispielsweise durch Anschweißen oder Ankleben einer Polymerfolie. Diese Kombinationen aus Elektrolyteinrichtung und peripher angebrachter Dichtung werden i.d.R. vorgefertigt.

Bei allen diesen Ausführungen sollen die Dichtungen ein unerwünschtes seitliches Austreten von Fluiden aus den jeweiligen Kathoden- oder Anodenkammern verhindern. Hierzu müssen sie beim Zusammenbau des Stacks präzise positioniert werden, was wegen ihrer geringen Formstabilität äußerste Sorgfalt erfordert und somit einen nicht unbeträchtlichen Anteil am Fertigungsaufwand bedingt.

Aber auch bei anfänglicher Dichtigkeit kann es im Lauf der Zeit wegen Ermüdens und/oder Fließverhalten bei den herkömmlichen Arten der Abdichtung zu Undichtigkeiten kommen.

Eine weitere Quelle für Undichtigkeiten besteht darin, dass die Flowfields der Strömungsplatten zum Zwecke der Fluidzufuhr und -abfuhr vielfach Kanäle aufweisen, die die Seitenbereiche der Platten durchstoßen. Dadurch wird in diesen Bereichen vorgesehenes Dichtungsmaterial beim Zusammenbau des Brennstoffzellenstacks unterschiedlich stark komprimiert, was ebenfalls zu Undichtigkeiten führen kann.

US-A-6 132 895 beschreibt eine Dichtrahmenanordnung nach dem Stand der Technik.

### Beschreibung der Erfindung

Es ist eine Aufgabe der Erfindung, die mit der Abdichtung von Brennstoffzellenstacks verbunden Schwierigkeiten zu beseitigen.

Ein besonderer Aspekt der Erfindung besteht weiterhin darin, den Zusammenbau eines Brennstoffzellenstacks zu vereinfachen.

Diese Aufgaben werden durch den in Anspruch 1 definierten erfindungsgemäßen Dichtrahmen gelöst.

Der erfindungsgemäße Dichtrahmen ist zum Einbau zwischen den Strömungsplatten eines Brennstoffzellenstacks vorgesehen und ist derart ausgebildet ist, dass er die wechselseitige Abdichtung der Kathodenbereiche und der Anodenbereiche des Stacks gewährleistet.

In vorteilhafter Weiterbildung sind die Außenabmessungen des Dichtrahmens denjenigen der Strömungsplatten angepasst, während die Innenanmessungen, d.h. die Abmessungen der Aussparung des Rahmens, an die aktiven Bereiche der Elektrolyteinrichtungen angepasst sind.

Im Unterschied zu Dichtmaterial, das herkömmlicherweise zur Abdichtung bei Brennstoffzellenstacks verwendet wird, ist der erfindungsgemäße Dichtrahmen formstabil und selbstragend, so dass er einfacher handhabbar ist. Die für die Fertigstellung des Stacks erforderliche Präzision wird dadurch leichter erreichbar, als dies beispielsweise bei weichem, flexiblen Dichtmaterial der Fall ist. Weder der Zusammenbau des Stacks, noch der Betrieb der fertigen Brennstoffzellenvorrichtung führen zu nennenswerten Änderungen in Form und/oder Abmessungen des Rahmens.

Dadurch eignet sich der Rahmen beispielsweise zur Stützung herkömmlichen Dichtmaterials und kann insbesondere vorteilhaft als Trägermaterial für solche Dichtungen verwendet werden, wodurch Formänderungen der Dichtung verhindert werden.

Die Dichtungen können vor der eigentlichen Montage des Stacks mit den Dichtrahmen verbunden werden, so dass diese vorgefertigten formstabilen Kombinationen beim Zusammenbau des Stacks verwendet werden können.

Bei Verwendung geeigneter Materialien kann die Dicke des Dichtrahmens so gering ausfallen, dass sein Beitrag zur Gesamthöhe des Stacks im Vergleich zur Ausführung ohne Verwendung des Rahmens nicht ins Gewicht fällt.

Um den Stack funktionell möglichst wenig zu beeinträchtigen, werden die Innenabmessungen des Rahmens vorteilhafterweise dem Umriss des aktiven Bereichs der Elektrolyteinrichtung angepasst. Vorzugsweise besitzt der Dichtrahmen daher im Wesentlichen dieselben (d.h. allenfalls geringfügig abweichende) Außenabmessungen wie die Strömungsplatten, und die Aussparung eine Abmessung, deren Abmessungen im Wesentlichen denen des aktiven Bereichs der Elektrolyteinrichtung des Brennstoffzellenstacks entsprechen.

In einer besonders bevorzugten Weiterbildung umfasst der Dichtrahmen ein Dichtungsmaterial zur Abdichtung von Kontaktflächen zwischen Strömungsplatten und/oder zwischen Strömungsplatte und Elektrolyteinrichtung.

Sowohl bei integraler Ausbildung von Dichtrahmen und Dichtung, beispielsweise bei Ausführung des Dichtrahmens als Metalldichtung, als auch mit den oben erwähnten vorgefertigten Kombinationen von Dichtrahmen mit aufgebrachter Dichtung kann der Herstellungsprozess des Brennstoffzellenstacks deutlich vereinfacht werden.

Im erster Fall können anstelle der Metalldichtungen auch Kunststoffe und Verbundwerkstoffe verwendet werden, die gegebenenfalls zur Erfüllung die Stabilitätsanforderungen verstärkt sein können. Im zweiten Fall kann der Dichtrahmen je nach Bedarf ein- oder beidseitig mit Dichtungsmaterial beschichtet sein.

Auch Kombinationen dieser beiden Weiterbildungen können von Vorteil sein, wenn beispielsweise eine Art von Dichtungsmaterial erwünschte Formstabiliätseigenschaften aufweist, während andere Arten besser zur Ausbildung von dauerhaften Verbindungen mit kontaktierenden Bereichen der Strömungsplatte oder der Elektrolyteinrichtung sind.

In einer bevorzugten Weiterbildung umfasst der erfindungsgemäße Dichtrahmen Aussparungen für Montageeinrichtungen und/oder Fluidzufuhr- bzw. Fluidabfuhreinrichtungen. Dies führt zu einer weiteren Vereinfachung des Montagevorgangs, da dadurch der zusätzliche Aufwand vermieden wird, der damit verbunden ist, solche Aussparungen für notwendige Durchführungen bei oder nach dem Zusammensetzen des Stacks einzubringen.

Vielfach werden Elektrolyteinrichtungen durch dünne Membranen ausgebildet, die ebenfalls eine nur geringe Eigenstabilität aufweisen. In solchen Fällen kann es vorteilhaft sein, fluiddicht miteinander verbundene Kombinationen aus Dichtrahmen und Elektrolyteinrichtung vorzufertigen, die sich beim Zusammenbau des Stacks ebenfalls wesentlich leichter handhaben lassen als die Elektrolyteinrichtung für sich allein. Diese Weiterbildung umfasst natürlich auch vorgefertigte Kombinationen des erfindungsgemäßen Dichtrahmens mit Elektrolyteinrichtungen und diese peripher umgebenden Dichtungen.

In einer weiteren bevorzugten Weiterbildung stellt die Erfindung vorgefertigte fluiddichte Kombinationen von Strömungsplatte und Dichtrahmen bereit.

Diese Kombinationen können aus je einer Strömungsplatte und einem Dichtrahmen bestehen. Alternativ können beide Seiten einer Strömungsplatte mit dichtend angebrachten Dichtrahmen versehen sein. In beiden Fällen kann der Montageprozess beim Zusammensetzen des Brennstoffzellenstacks deutlich vereinfacht werden.

Die grundlegenden Prinzipien und weitere Vorteile der Erfindung werden anhand der nachfolgend beschriebenen Figuren deutlich.

Es zeigen:
- Fig. 1:: eine schematische Darstellung eines Brennstoffzellenstacks;
- Fig. 2:: eine perspektivische Explosionsdarstellung eines vergrößerten Ausschnitts des Brennstoffzellenstacks;
- Fig.3:: eine Schnittansicht zur Veranschaulichung einer mögliche Quelle für Undichtigkeiten bei herkömmlichen Stacks;
- Fig. 4:: die Ober- und Unterseite einer als Bipolarplatte ausgebildeten Strömungsplatte mit den entsprechenden kathoden- und anodenseitigen Flowfields;
- Fig. 5:: einen erfindungsgemäßen Dichtrahmen für den in Fig. 4 gezeigten Typ von Bipolarplatten;
- Fig. 6:: die Verwendung einer erfindungsgemäßen Ausführungsform zur Vermeidung der in Fig. 3 gezeigten Undichtigkeiten;
- Fig. 7:: die Verwendung von weiteren erfindungsgemäßen Ausführungsformen zur Vermeidung der in Fig. 3 gezeigten Undichtigkeiten.

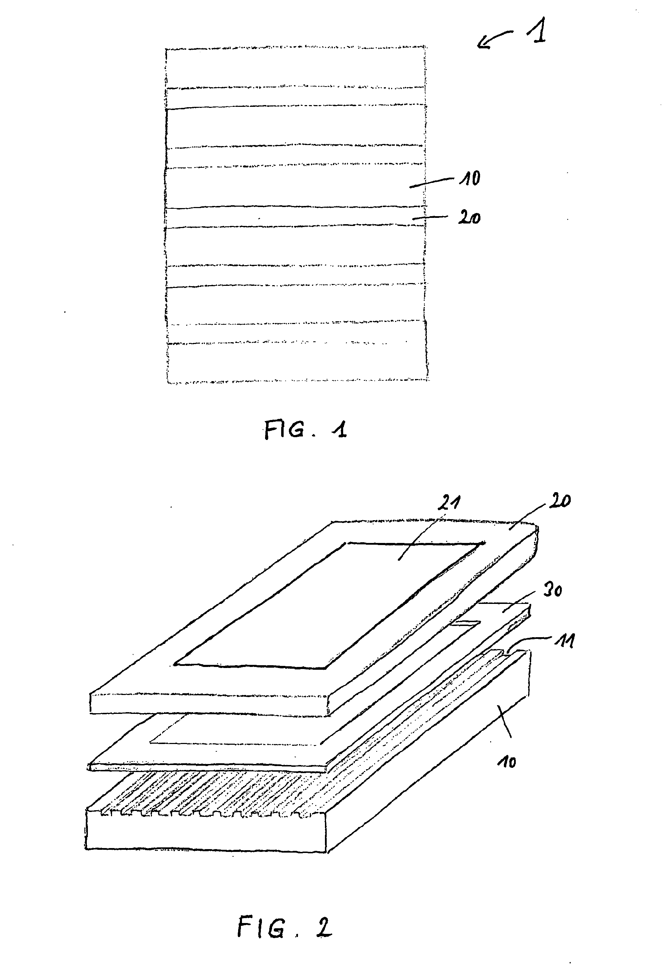

Fig. 1 zeigt eine schematische Darstellung eines Brennstoffzellenstacks 1, der eine alternierende Stapelung von Bipolarplatten 10 und flächigen oder plattenförmigen Elektrolyteinrichtungen 20 umfasst. Die Elektrolyteinrichtungen umfassen Katalysatoren, Elektroden und Gasdiffusionsschichten, die im Einzelnen der besseren Übersichtlichkeit halber nicht abgebildet sind.

Die zwischen den Bipolarplatten 10 und den Elektrolyteinrichtungen 20 liegenden Bereiche werden als Kathoden- und Anodenbereiche oder -kammern bezeichnet. Ein wesentliches Kriterium für das Design von Brennstoffzellenstacks besteht stets darin, zu vermeiden, dass Kathodenfluide ungewollt in eine Anodenkammer gelangen können, und ebenso umgekehrt zu vermeiden, dass Anodenfluide ungewollt in eine Kathodenkammer gelangen können. Aus diesem Grund werden die Fluide häufig an unterschiedlichen Seiten des Stacks zu-/abgeführt. Mit der möglichen Ausnahme von für die Zu- bzw. Abfuhr von Fluiden vorgesehenen seitlichen Durchführungen oder Vertiefungen müssen die Kathoden- und Anodenkammem seitlich fluiddicht abgedichtet werden.

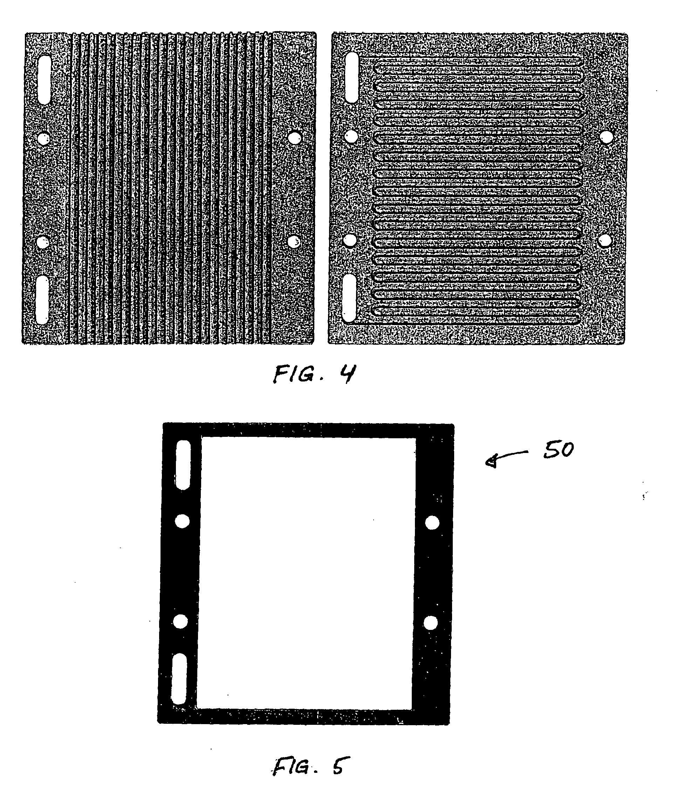

Um dies zu veranschaulichen, zeigt Fig. 2 eine perspektivische Explosionsdarstellung eines vergrößerten Ausschnitts des Brennstoffzellenstacks. Zwischen einer Elektrolyteinrichtung 20 und einer Bipolarplatte 10 ist eine umlaufende Dichtung 30 vorgesehen, die in der gezeigten Konfiguration die seitlichen linken und rechten Kontaktflächen zwischen Elektrolyteinrichtung 20 und Bipolarplatte 10 vollständig abdichtet. Im Inneren spart die Dichtung 30 einen Bereich aus, der flächenmäßig etwa den auf der Ober- und Unterseite der Elektrolyteinrichtung 20 angebrachten Elektroden 21 entspricht. Die Oberseite der skizzierten Bipolarplatte 10 weist eine Vielzahl von durchgehenden parallelen Vertiefungen 11 auf, die der Zu- und Abfuhr eines kathodenseitigen (oder anodenseitigen) Fluids dienen. Ähnliche Vertiefungen sind auch an der Unterseite der Bipolarplatte 10 vorgesehen (in Fig. 2 nicht gezeigt, vgl. hierzu Fig. 4), wo sie entsprechend der Zu- und Abfuhr eines anodenseitigen (oder kathodenseitigen) Fluids dienen.

Die seitliche Abdichtung der (Anoden- und Kathoden-) "Kammern", d.h. der Bereiche zwischen Bipolarplatte 10 und Elektrolyteinrichtung 20, stellt ein Problem dar, dass in der Technik nur ungenügend oder mit hohem Aufwand bewältigt wird. Die Quellen solcher Undichtigkeiten sind vielfältig: unterschiedliche Temperaturen bei Montage und Betrieb, Alterungsprozesse (verstärkt durch wiederholtes Aufwärmen und Abkühlen), Fließen, etc. tragen genauso zu Undichtigkeiten bei wie uneinheitliche Spaltbreiten zwischen abzudichtenden Flächen.

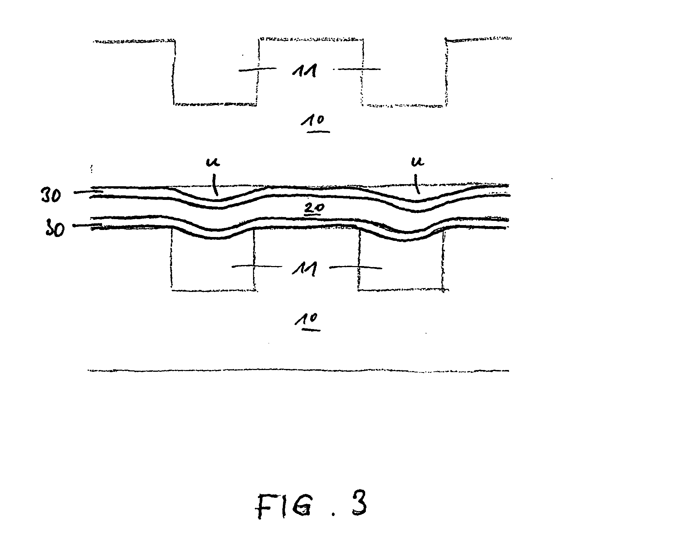

Fig.3 ist eine Schnittansicht zur Veranschaulichung einer mögliche Quelle für Undichtigkeiten bei auf herkömmliche Weise, d.h. ohne Dichtrahmenrahmen, aufgebauten Stacks.

Die Zeichnung zeigt ein Paar Bipolarplatten 10 mit einer sandwichartig eingelagerten Elektrolyteinrichtung 20, die im vorliegenden Fall durch eine dünne und verhältnismäßig leicht verformbare Membran gebildet wird. Zwischen jeder Bipolarplatte 10 und der Elektrolyteinrichtung 20 ist jeweils eine Dichtung 30 vorgesehen.

Die Oberseite der illustrierten Bipolarplatten 10 weist jeweils die Seitenbereiche durchstoßende Kanäle 11 auf, die durch die angrenzende Dichtung 30 überbrückt werden.

Dabei besteht die Tendenz, dass Dichtungsmaterial etwas in die Kanäle 11 eindringt, was mehrere negative Folgen haben kann:

So werden einerseits die Strömungsverhältnisse in den Kanälen 11 durch die teilweise Querschnittsverengung verändert. Schlimmstenfalls können die Kanäle ganz blockiert werden (die Zeichnung ist nicht maßstäblich). Andererseits können die Membran 20 und die mit der flachen Unterseite der oberen Bipolarplatte 10 verbundene obere Dichtung 30 wie die untere Dichtung 30 nachgeben, so dass sich eine undichte Stelle u zum unteren Flowfield der oberen Bipolarplatte 10 ergibt. An diesen Stellen kann ein Fluidaustausch zwischen Anoden- und Kathodenkammem auftreten, was den Betrieb der Brennstoffzelle beeinträchtigt oder ganz unmöglich macht.

Um diese Schwierigkeiten zu überwinden, stellt die Erfindung einen Dichtrahmen 50 bereit, der die oben beschriebenen Dichtungen ersetzt oder als Träger- und Stützmaterial für diese Dichtungen dient und dadurch deren Tendenz zu zeitlichen und/oder örtlichen Änderungen verringert.

Fig. 5 zeigt einen derartigen Dichtrahmen 50, der zur Verwendung mit der in Fig. 4 in oberer und unterer Ansicht gezeigten Bipolarplatte ausgebildet ist.

Eine Seite der in Figur 4 gezeigten Bipolarplatte weist die schon in den Figuren 2 und 3 angedeuteten durchgehenden parallelen Längskanäle auf (linkes Teilbild). Die Fluidzufuhr bzw. -abfuhr erfolgt direkt an den Enden dieser Kanäle, d.h an der Stirn- bzw. Rückseite des Stacks.

Die andere Seite der Bipolarplatte hat nur einen durchgehenden, aber dafür mäandernden Kanal, dessen längere Teilabschnitte im wesentlichen ebenfalls parallel zueinander und senkrecht zu den oben beschriebenen Kanälen sind. Zur Fluidzufuhr bzw. -abfuhr sind hierzu in jeder Bipolarplatte zwei Bohrungen vorgesehen, die mit den Enden des mäandernden Kanals in Verbindung stehen und die in der vorliegenden Ausführung eine ovale Form aufweisen.

Ferner weisen die Bipolarplatten in dieser Ausführungsform vier weitere, kreisförmige Bohrungen auf, die zur Montage des Brennstoffzellenstacks dienen.

Die für diesen Typ Bipolarplatte vorgesehenen Dichtrahmen 50 weisen im wesentlichen den gleichen Umriss wie die Bipolarplatte auf und sind mit Aussparungen versehen, die den obengenannten Bohrungen durch die Bipolarplatten entsprechen. Der Dichtrahmen hat eine (im vorliegenden Fall rechteckige) mittige Aussparung, dessen Innenabmessungen entsprechend den Elektrodenflächen dimensioniert sind. Sie entsprechen ferner in etwa der Größe des im rechten Teilbild von Fig. 4 abgebildeten Flowfields.

Die die Flowfields umgebenden Seitenbereiche der Bipolarplatte sind eben, sieht man einmal von den Unterbrechungen durch die oben beschriebenen Bohrungen und den die Seitenbereiche durchstoßenden Kanälen (linkes Teilbild von Fig. 4) ab. An diesen Stellen können bei herkömmlicher Bauweise - ohne den erfindungsgemäßen Dichtrahmen 50 - die im Zusammenhang mit Fig. 3 diskutierten Probleme auftreten.

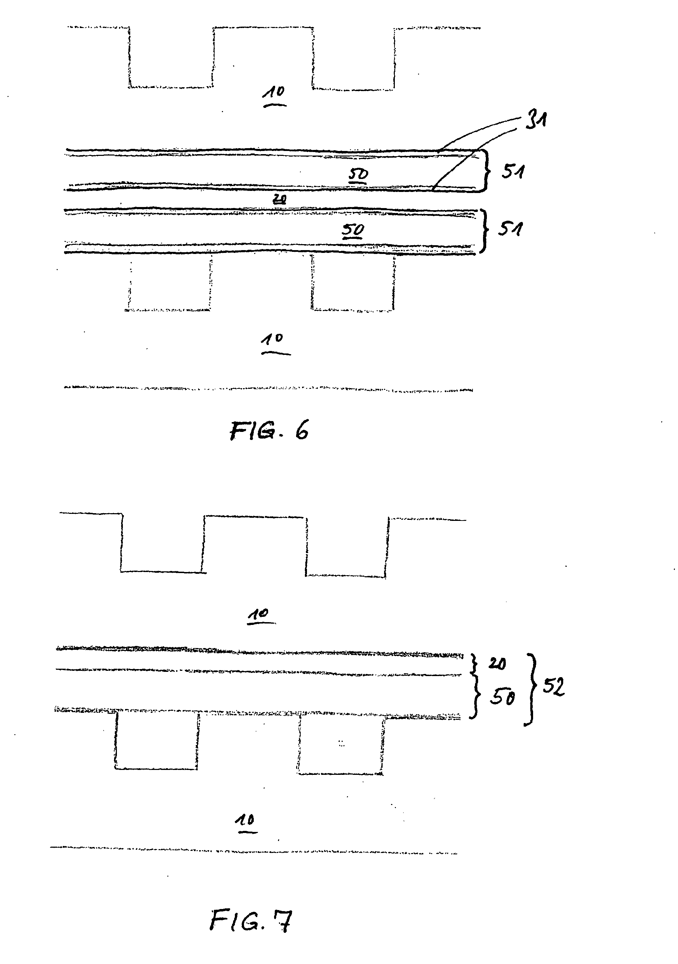

Zum Aufbau eines Brennstoffzellenstacks unter Zuhilfenahme des erfindungsgemäßen Rahmens sind eine Vielzahl von Anordnungen möglich, von denen zwei in den Figuren 6 und 7 veranschaulicht sind.

In Fig. 6 werden im Vergleich zu Fig. 3 die dort direkt zwischen Bipolarplatte 10 und Elektrolyteinrichtung 20 vorgesehenen Dichtungen 30 jeweils durch eine Dichtrahmen-Dichtung-Kombination 51 ersetzt, die aus einem Dichtrahmen 50 besteht, der beidseitig mit Dichtungsmaterial 31 beschichtet ist. Der Dichtrahmen 50 kann beispielsweise aus Metall sein und dadurch den auf ihm vorgesehenen Dichtungen 31 Formstabilität verleihen, was sowohl für den Zusammenbau des Stacks (bessere Handhabbarkeit, geringere Empfindlichkeit) als auch für den zusammengebauten Stack (Dichtigkeit, Stabilität) von Vorteil ist.

Den Einsatz einer besonders bevorzugte Ausführungsform des erfindungsgemäßen Dichtrahmens 50 zeigt Fig. 7:

Hier wird der Rahmen aus einem Material hergestellt, das selbst dichtende Eigenschaften aufweist, so dass an der Grenzfläche zwischen Rahmen 50 und unterer Bipolarplatte 10 keine zusätzlichen Dichtmaterialien aufgebracht werden müssen. An die Oberseite des Rahmens schließt sich die Elektrolyteinrichtung 20 an, die im vorliegenden Fall aus einer Membran gebildet wird, die ebenfalls dichtende Eigenschaften aufweist.

Somit wird weder für die Grenzfläche zwischen Rahmen 50 und Elektrolyteinrichtung 20, noch für die Grenzfläche zwischen Elektrolyteinrichtung 20 und Bipolarplatte 10 eine separate Dichtung benötigt.

In der in Fig. 7 vorliegenden Ausführungsform wird ein besonders einfacher Zusammenbau eines Brennstoffzellenstacks dadurch ermöglicht, dass der Dichtrahmen 50 und die Elektrolytmembran der Elektrolyteinrichtung 20 als kombinierte Einheit 52 vorgefertigt werden.

Ähnliche Vorteile können mit anderen vorgefertigten Kombinationen erzielt werden, beispielsweise durch dichtend vorgefertigte Bipolarplatte-Dichtrahmen-Kombinationen.

Der erfindungsgemäße Dichtrahmen trägt in allen durch die Patentansprüche gedeckten Ausführungen bei, eine einfachere und zuverlässigere Montage von Brennstoffzellenstacks zu gewährleisten. Gegenüber herkömmlichen Abdichtungen wird durch die alternative oder zusätzliche Verwendung des Dichtrahmens eine bessere wechselseitige Abdichtung der Kathoden- und Anodenbereiche eines Stacks erzielt.

## Patentansprüche

1. Dichtrahmen (50) für Brennstoffzellenstacks mit einer alternierenden Anordnung von Strömungsplatten (10) und Elektrolyteinrichtungen (20) und mit zwischen den Strömungsplatten (10) und Elektrolyteinrichtungen (20) gebildeten Kathoden- und Anodenbereichen, wobei der Dichtrahmen (50) derart ausgebildet ist, dass er
zum Einbau zwischen den Strömungsplatten (10) geeignet ist,
die wechselseitige Abdichtung der Kathodenbereiche und der Anodenbereiche gewährleistet, und
wobei der Dichtrahmen (50) seitlich fluiddicht, formstabil und selbstragend ausgebildet ist.

2. Dichtrahmen (50) gemäß Anspruch 1, mit Außenabmessungen, die dem Umriss der Strömungsplatten (10) angepasst sind, und Innenabmessungen, die dem Umriss eines aktiven Bereichs (21) der Elektrolyteinrichtungen (20) des Brennstoffzellenstacks angepasst sind.

3. Dichtrahmen (50) gemäß einem der vorangegangenen Ansprüche, mit im Wesentlichen denselben Außenabmessungen wie die Strömungsplatten (10) und im Wesentlichen denselben Innenabmessungen wie die aktiven Bereiche der Elektrolyteinrichtungen (20).

4. Dichtrahmen (50) gemäß einem der vorangegangenen Ansprüche, umfassend ein Dichtungsmaterial.

5. Dichtrahmen (50) gemäß Anspruch 4, bestehend aus Dichtungsmaterial.

6. Dichtrahmen (50) gemäß einem der Ansprüche 4 und 5, mit einer ein- oder beidseitigen Beschichtung mit Dichtungsmaterial (31).

7. Dichtrahmen (50) gemäß einem der vorangegangenen Ansprüche, mit Aussparungen für Montageeinrichtungen und/oder Fluidzufuhr- bzw. Fluidabfuhreinrichtungen.

8. Dichtrahmen (50) gemäß einem der vorangegangenen Ansprüche, mit einer E-lektrolyteinrichtung (20), die mit dem Dichtrahmen (50) fluiddicht verbunden ist.

9. Strömungsplatte (10) mit einem Dichtrahmen (50) gemäß einem der vorangegangenen Ansprüche, der an einer Seite der Strömungsplatte (10) dichtend angebracht ist.

10. Strömungsplatte (10) mit zwei Dichtrahmen (50) gemäß den Ansprüchen 1 bis 7, die an je einer Seite der Strömungsplatte (10) dichtend angebracht sind.

11. Verfahren zur Herstellung eines Brennstoffzellenstacks mit einer alternierenden Anordnung von Strömungsplatten (10) und Elektrolyteinrichtungen (20), wobei zur Überbrückung von Kanälen (11) an einer Ober- und/oder Unterseite der Strömungsplatten (10), die Seitenbereiche der Strömungsplatten (10) durchstoßen, ein Dichtrahmen (50) gemäß einem der Ansprüche 1 bis 8 wenigstens auf der Seite jeder Strömungsplatte (10) vorgesehen wird, auf der die Seitenbereiche von den Kanälen (11) durchstoßen werden.

## Claims

1. Sealing frame (50) for fuel cell stacks having an alternating arrangement of flow plates (10) and electrolytic facilities (20) and cathode and anode regions formed between the flow plates (10) and the electrolytic facilities (20), wherein the sealing frame (50) is formed such that
it is suited for installation between the flow plates (10),
ensures the mutual sealing of the cathode regions and the anode regions, and
wherein the sealing frame (50) is formed to be laterally fluid-impermeable, dimensionally stable and self-supporting.

2. Sealing frame (50) according to claim 1, with outer dimensions being adapted to the contour of the flow plates (10) and with inner dimensions being adapted to the contour of an active region (21) of the electrolytic facilities (20) of the fuel cell stack.

3. Sealing frame (50) according to one of the preceding claims, having substantially the same outer dimensions as the flow plates (10) and having substantially the same inner dimensions as the active regions of the electrolytic facilities (20).

4. Sealing frame (50) according to one of the preceding claims, comprising a sealing material.

5. Sealing frame (50) according to claim 4, formed of a sealing material.

6. Sealing frame (50) according to one of claims 4 and 5, with a sealing material coating (31) on one or both sides.

7. Sealing frame (50) according to one of the preceding claims, with recesses for mounting devices and/or facilities for the supply and removal of fluids.

8. Sealing frame (50) according to one of the preceding claims, with an electrolytic facility (20) connected with the sealing frame (50) in a fluid-impermeable manner.

9. Flow plate (10) having a sealing frame (50) according to one of the preceding claims, attached on one side of the flow plate (10) in a sealing manner.

10. Flow plate (10) having two sealing frames (50) according to one of claims 1 to 7 attached on each side of the flow plate (10) in a sealing manner.

11. Method of fabricating a fuel cell stack having an alternating arrangement of flow plates (10) and electrolytic facilities (20), wherein, for bridging over channels (11) which push through lateral portions of the flow plates (10), a sealing frame (50) according to one of claims 1 to 8 is provided at least on the side of each flow plate (10) on which the side portions are pushed through by the channels (11).

## Revendications

1. Cadre d'étanchéité (50) pour empilements de piles à combustible, avec un agencement alterné de plaques d'écoulement (10) et de dispositifs à électrolyte (20) et avec des zones de cathode et d'anode formées entre les plaques d'écoulement (10) et les dispositifs à électrolyte (20), dans lequel le cadre d'étanchéité (50) est réalisé de telle sorte
qu'il convient au montage entre les plaques d'écoulement (10),
qu'il assure l'étanchéité mutuelle des zones de cathode et des zones d'anode, et
dans lequel le cadre d'étanchéité (50) est réalisé pour être latéralement étanche au fluide, indéformable et autoporteur.

2. Cadre d'étanchéité (50) selon la revendication 1, avec des dimensions extérieures qui sont adaptées au contour des plaques d'écoulement (10), et des dimensions intérieures qui sont adaptées au contour d'une zone active (21) des dispositifs à électrolyte (20) de l'empilement de piles à combustible.

3. Cadre d'étanchéité (50) selon l'une quelconque des revendications précédentes, ayant substantiellement les mêmes dimensions extérieures que les plaques d'écoulement (10) et substantiellement les mêmes dimensions intérieures que les zones actives des dispositifs à électrolyte (20).

4. Cadre d'étanchéité (50) selon l'une quelconque des revendications précédentes, comprenant un matériau d'étanchéité.

5. Cadre d'étanchéité (50) selon la revendication 4, composé d'un matériau d'étanchéité.

6. Cadre d'étanchéité (50) selon l'une quelconque des revendications 4 et 5 avec un revêtement en matériau d'étanchéité (31) sur un ou deux côtés.

7. Cadre d'étanchéité (50) selon l'une quelconque des revendications précédentes, avec des évidements pour des dispositifs de montage et/ou des dispositifs d'amenée ou d'évacuation de fluide.

8. Cadre d'étanchéité (50) selon l'une quelconque des revendications précédentes, avec un dispositif à électrolyte (20) qui est relié au cadre d'étanchéité (50) de façon étanche au fluide.

9. Plaque d'écoulement (10) avec un cadre d'étanchéité (50) selon l'une quelconque des revendications précédentes, qui est monté sur un côté de la plaque d'écoulement (10) en assurant l'étanchéité.

10. Plaque d'écoulement (10) avec deux cadres d'étanchéité (50) selon les revendications 1 à 7, qui sont montés sur chaque côté de la plaque d'écoulement (10) en assurant l'étanchéité.

11. Procédé de fabrication d'un empilement de piles à combustible avec un agencement alterné de plaques d'écoulement (10) et de dispositifs à électrolyte (20), dans lequel pour couvrir des canaux (11), sur un côté supérieur et/ou un côté inférieur des plaques d'écoulement (10), qui percent les zones latérales des plaques d'écoulement (10), un cadre d'étanchéité (50) selon l'une quelconque des revendications 1 à 8 est prévu au moins sur le côté de chaque plaque d'écoulement (10) sur lequel les zones latérales sont percées par les canaux (11).
